# EUROPEAN PATENT APPLICATION

(11) **EP 3 970 825 A1**
(43) Date of publication of application: **23.03.2022**
(21) Application number: 21196405.1
(22) Date of filing: 13.09.2021
(51) Int. Cl.: B01D 29/11, B01D 29/52, B01D 29/54, B01D 35/30

(54) **FILTER WITH INTERCONNECTED HOLLOW ELEMENTS AND METHOD OF USE**

(30) Priority: 18.09.2020 US 202017025135
(71) Applicant: Pall Corporation, Port Washington, NY 11050 (US)
(72) Inventor: BAIR, James A., Cortland, 13045 (US); STURDEVANT, Eddie J., Cortland, 13045 (US)
(74) Representative: Hoeger, Stellrecht & Partner Patentanwälte mbB

(57) **Abstract**

Filters comprising at least one filter arm comprising a plurality of hollow elements in fluid communication with each other, the hollow elements having porous walls, the at least one filter arm having a first end and a second end; and, a hollow base having a side wall, and a base outlet port, wherein the hollow base is in fluid communication with the at least one filter arm, wherein the second end of the at least one filter arm is connected to the hollow base; filter devices including the filters, and methods of using the filters, are disclosed.

## Description

### BACKGROUND OF THE INVENTION

In order to achieve filtration performance targets, it may be necessary to use large and/or multiple filtration devices, or use filter devices that have to be replaced more often due to an increase in pressure drop resulting from insufficient filtration area. Either alternative can result in increased cost.

Thus, there is a need for improved filters. The present invention provides for ameliorating at least some of the disadvantages of the prior art. These and other advantages of the present invention will be apparent from the description as set forth below.

### BRIEF SUMMARY OF THE INVENTION

An aspect of the invention provides a filter comprising (a) at least one filter arm comprising a plurality of hollow elements in fluid communication with each other, the hollow elements having porous walls, the at least one filter arm having a first end and a second end; and, (b) a hollow base having a side wall, and a base outlet port, wherein the hollow base is in fluid communication with the at least one filter arm, wherein the second end of the at least one filter arm is connected to the hollow base.

In accordance with aspects of the invention, a hollow element can have a rounded shape or a non-rounded shape, and a filter arm can include hollow elements each having the same shape or having different shapes.

In a preferred aspect, the filter comprises a plurality of filter arms, each filter arm in fluid communication with the hollow base.

Aspects of the invention include filter devices including aspects of the filters, and methods of filtration using the filters and filter devices.

### BRIEF DESCRIPTION OF THE SEVERAL VIEWS OF THE DRAWING(S)

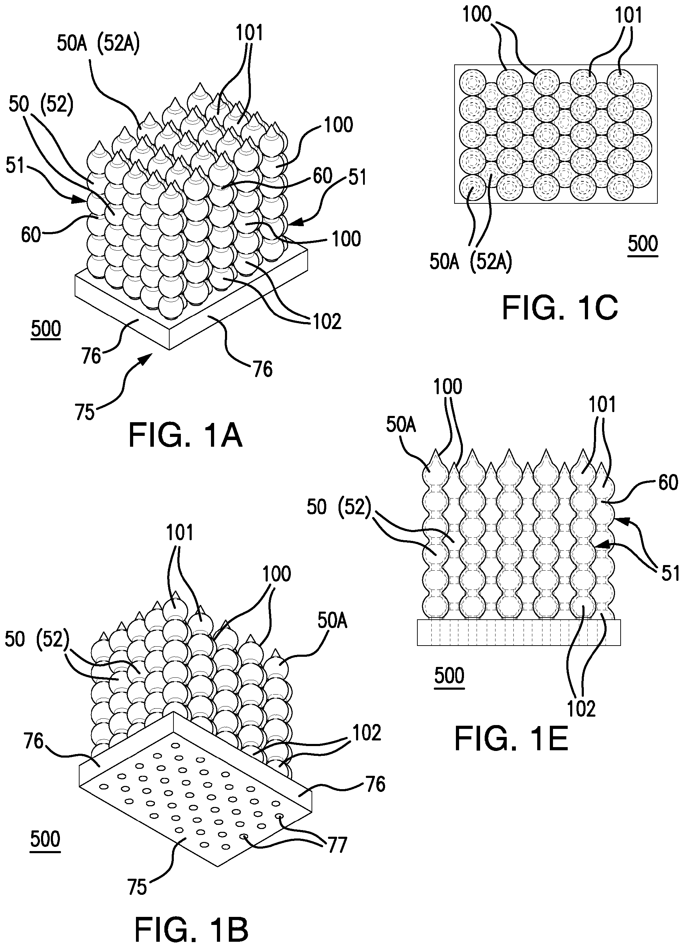

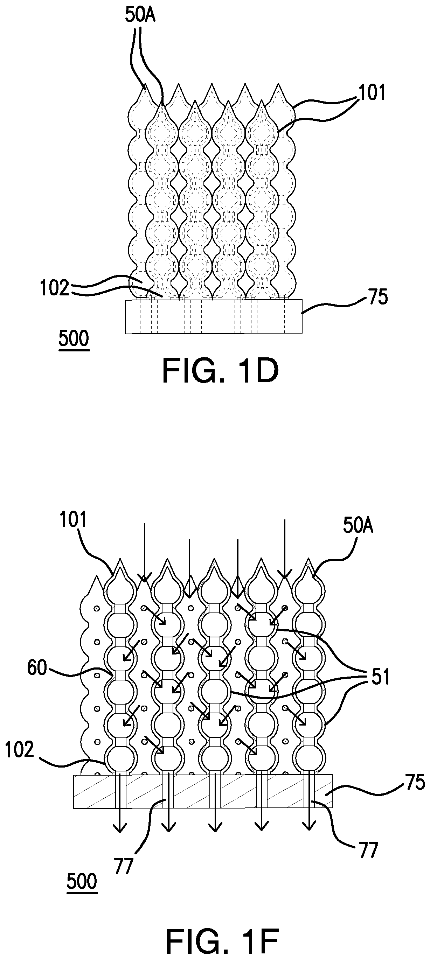

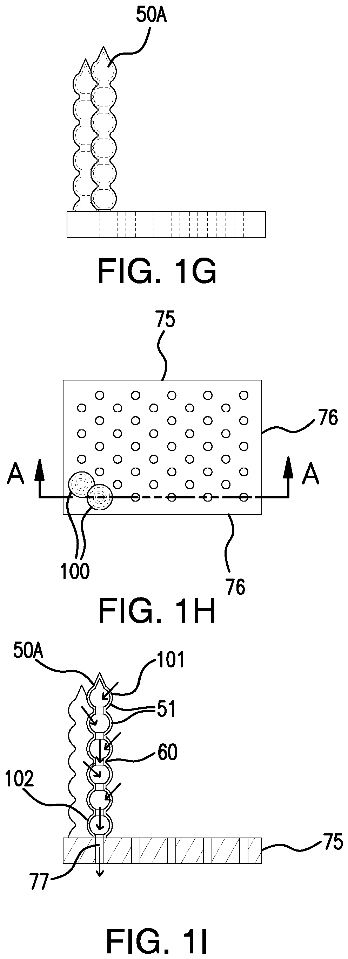

Figure 1A illustrates a top perspective view of a filter according to an aspect of the invention, the filter including a plurality of arms including hollow rounded elements (illustrated as spherical elements), wherein adjacent hollow rounded elements are connected to, and in fluid communication with, each other via an integral neck, each arm having a first end and a second end, wherein the second end is connected to a hollow base; Figure 1B illustrates a bottom perspective view of the filter shown in Figure 1A; Figure 1C shows a top view of the filter shown in Figure 1A; Figure 1D is a side perspective transparent view of the filter shown in Figure 1A; Figure 1E is side perspective view of the filter shown in Figure 1A; and Figure 1F is a cross-sectional view of the filter shown in Figure 1A, also showing outside-in filtration flow paths, with the filtrate passing through the base at the bottom; Figure 1G shows a side transparent view of two arms of the filter shown in Figure 1A in an axial arrangement; Figure 1H shows a top view of the two arms shown in Figure 1G, and Figure 1I shows a cross-sectional view of one arm along line A-A of Figure 1H, also showing the outside-in filtration path.

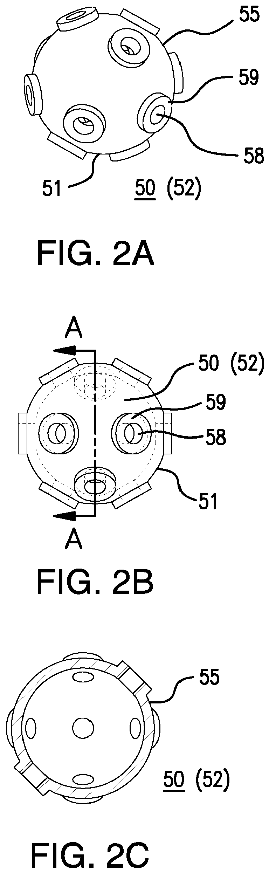

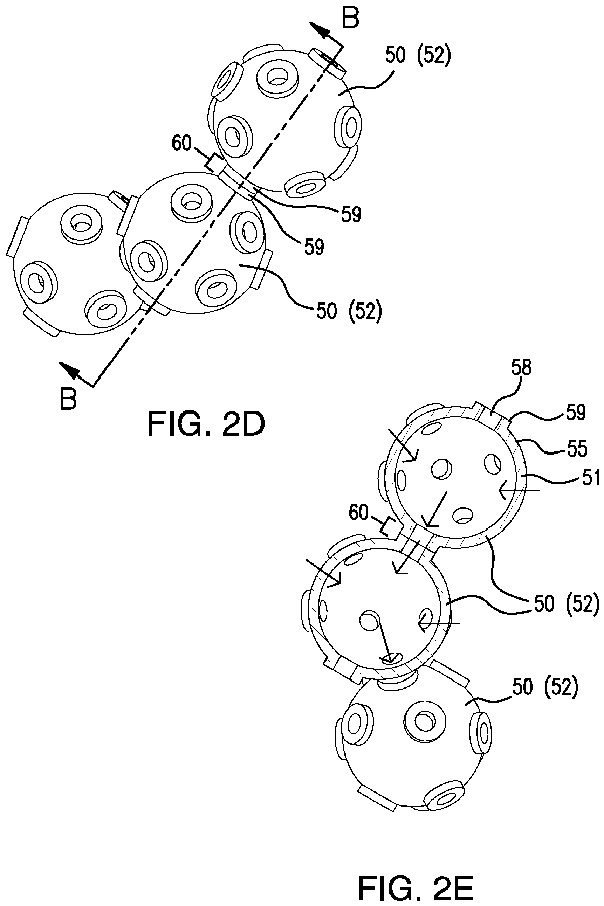

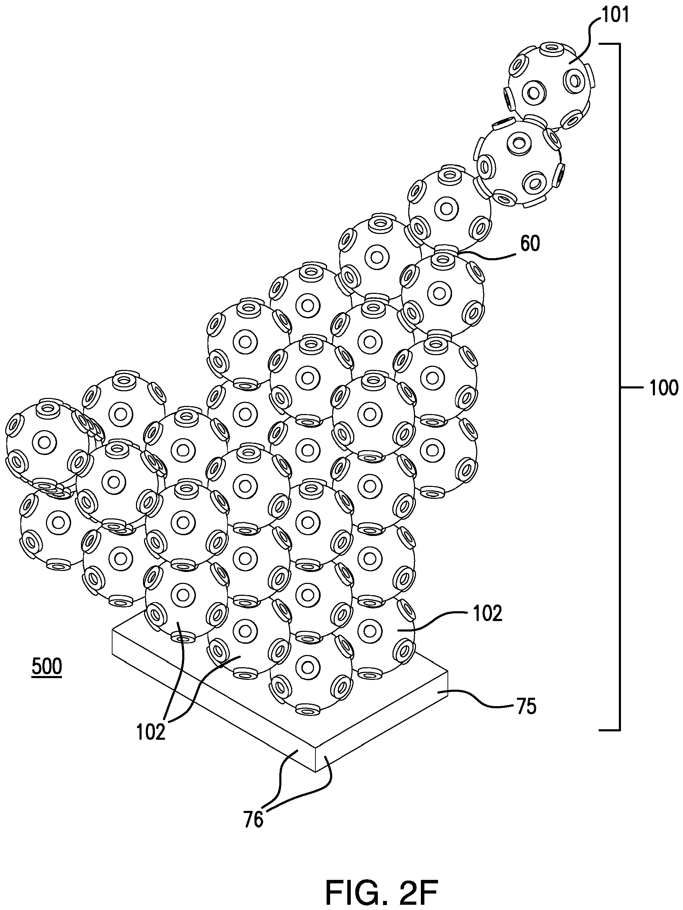

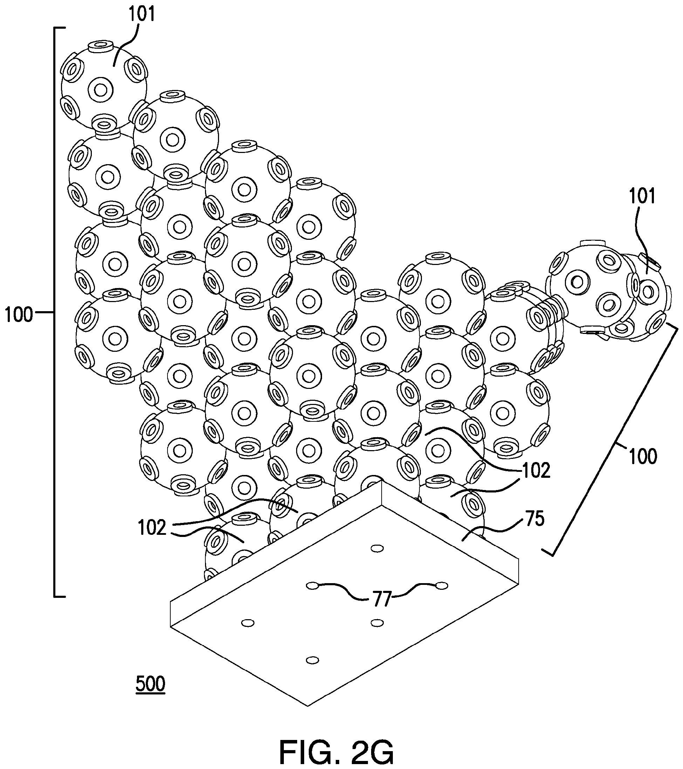

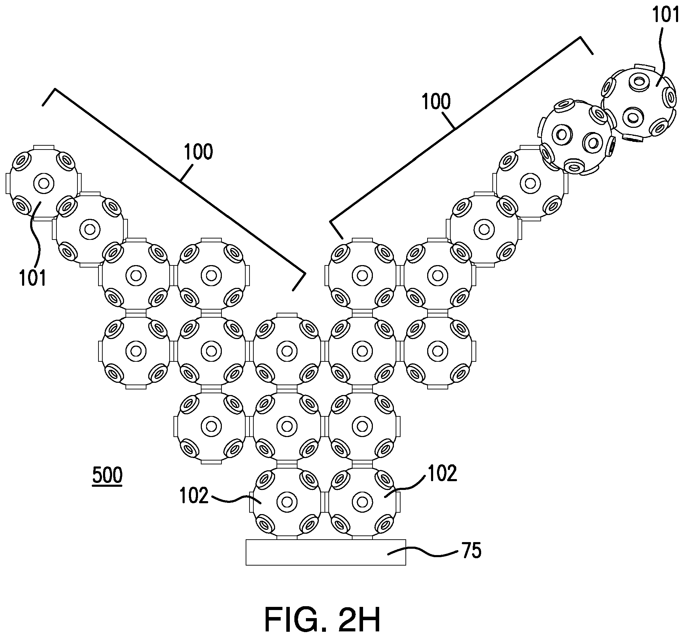

Figures 2A-2H show various views of hollow rounded elements in filter arms in the filter as generally shown in Figure 1A, with the exception that the hollow rounded element at the first end is rounded at the top, and the integral necks include collars on the outer surfaces of the hollow rounded elements. Figure 2A shows a perspective view of a hollow rounded element including a plurality of coordination points; Figure 2B shows a top view of the element shown in Figure 2A; Figure 2C shows a sectional view of the element along line A-A in Figure 2B; Figure 2D shows a perspective view of several hollow rounded elements, wherein each element is connected to, and in fluid communication with, an adjacent element via a coordination point, the connected coordination points providing an integral neck; Figure 2E shows a section view of the elements along line B-B of Figure 2D, also showing an outside-in filtration flow path; Figure 2F shows a top perspective view of a filter including a plurality of arms including hollow rounded elements according to another aspect of the invention; Figure 2G shows a bottom perspective view of the filter shown in Figure 2F; and Figure 2H shows a side perspective view of the filter shown in Figure 2F, also showing that an individual hollow rounded element can be connected to, and in fluid communication with, a plurality of adjacent elements via coordination points.

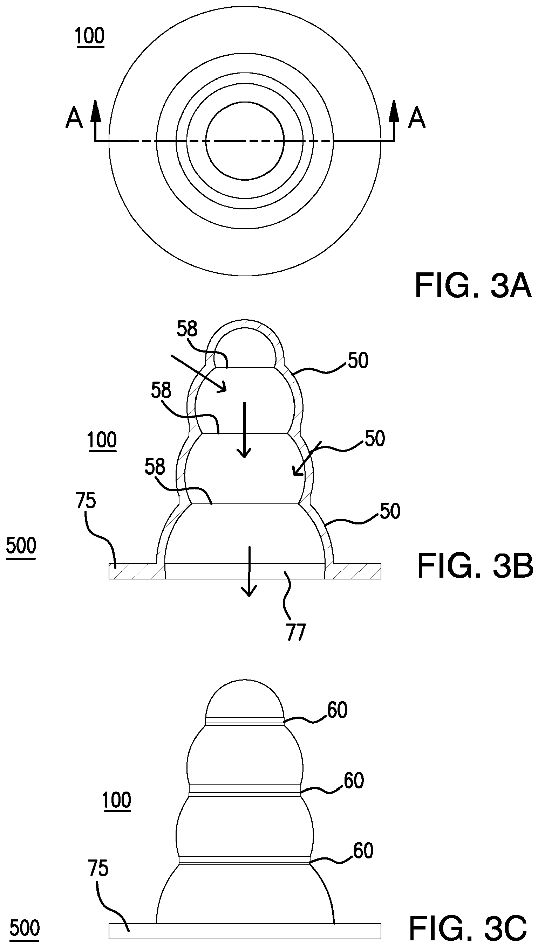

Figures 3A-3C show a filter including a filter arm with hollow rounded elements in accordance with another aspect of the invention, wherein adjacent hollow rounded elements have different diameters, and are connected via coordination points. Figure 3A shows a top view; Figure 3B shows a side view; and Figure 3C shows a sectional view along line A-A of Figure 3A, also showing tapered flow geometries increasing in diameter toward the base of the filter.

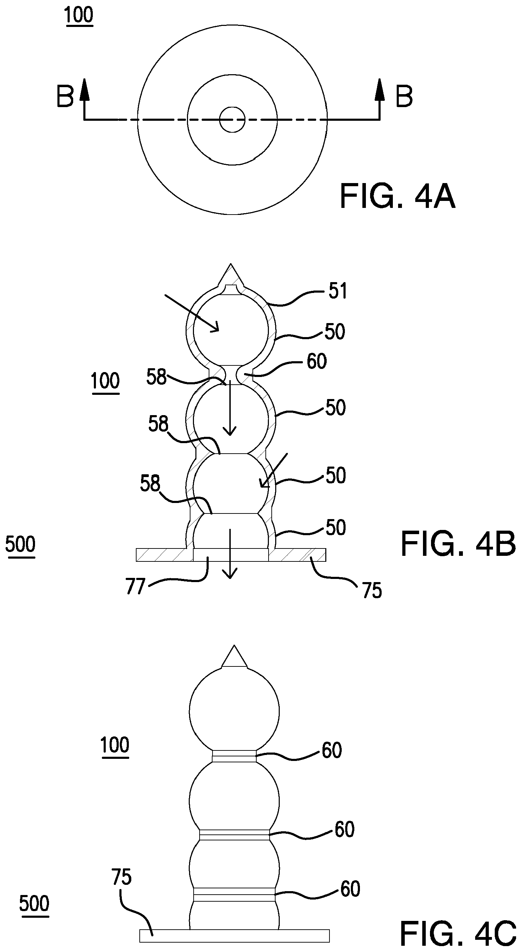

Figures 4A-4C show a filter including a filter arm with hollow rounded elements in accordance with yet another aspect of the invention, wherein the adjacent hollow rounded elements are connected via coordination points. Figure 4A shows a top view; Figure 4B shows a side view; and Figure 4C shows a sectional view along line B-B of Figure 4A, also showing an outside-in flow path and several elements having a reduced internal volume toward the base of the filter.

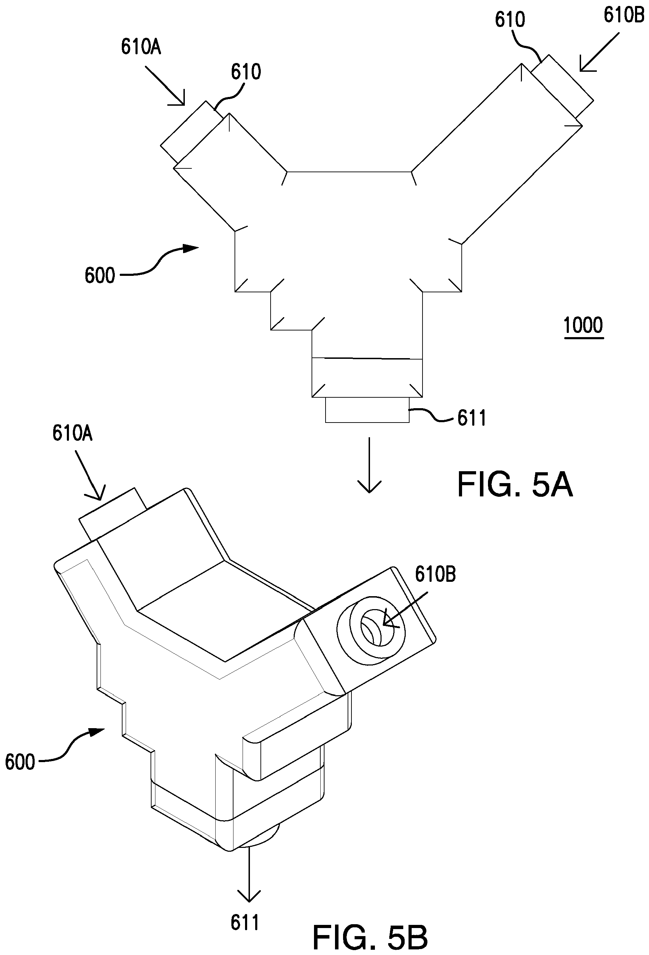

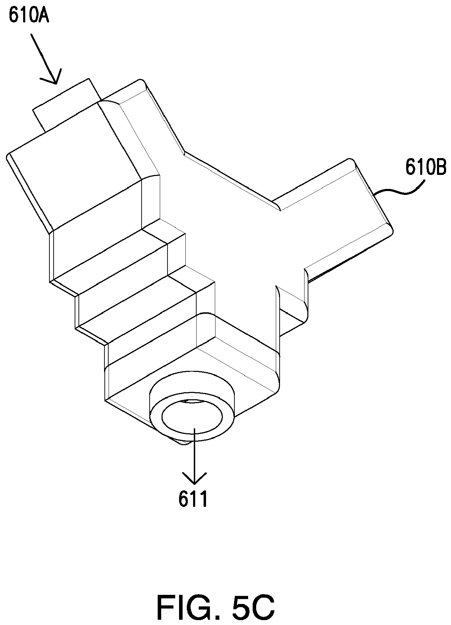

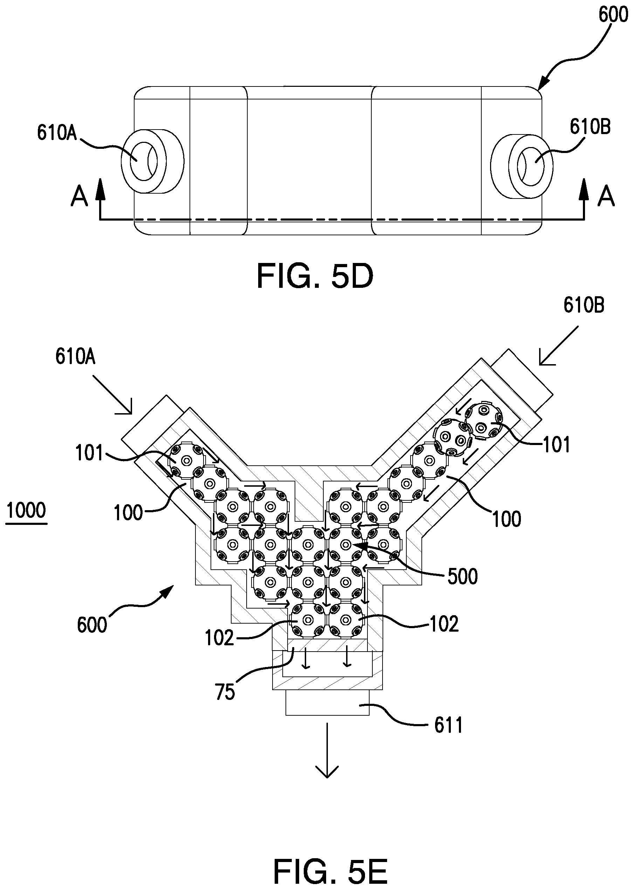

Figures 5A-5E show a filter device according to another aspect of the invention, comprising the aspect of the filter shown in Figure 2F arranged in a housing. Figure 5A shows a side view of the housing, including two inlets and an outlet; Figure 5B shows a perspective top view of the housing shown in Figure 5A; Figure 5C shows a perspective bottom view of the housing shown in Figure 5A; Figure 5D shows a top view of the housing; and Figure 5E shows a sectional view of the filter device along line A-A of Figure 5D, also showing the filter shown in Figure 2F arranged in the housing, the housing defining fluid flow paths between the inlets and the outlet, with the filter arranged in the housing across the fluid flow paths, wherein outside-in filtration provides filtered fluid passing through the filter base and outlet ports and the housing outlet.

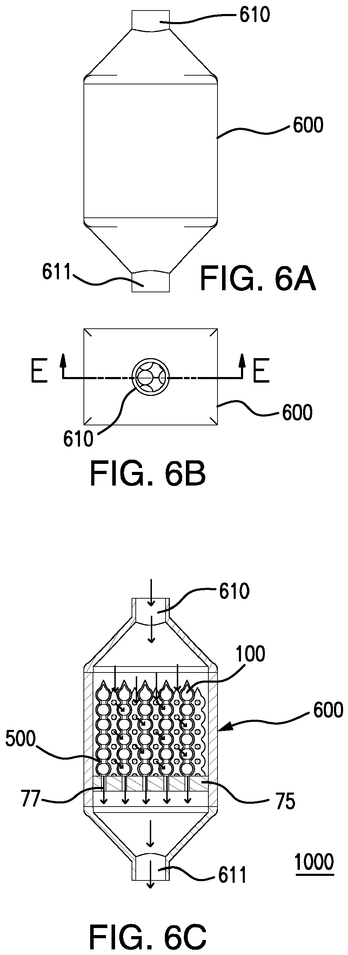

Figures 6A-6C show a filter device according to another aspect of the invention, comprising the aspect of the filter shown in Figure 1A arranged in a housing. Figure 6A shows a side view of the housing having an inlet and an outlet, Figure 6B shows a top view of the housing; and Figure 6C shows a sectional view of the filter device along line E-E of Figure 6B, also showing the filter shown in Figure 1A arranged in the housing, the housing defining a fluid flow path between the inlet and the outlet, with the filter arranged in the housing across the fluid flow path, wherein outside-in filtration provides filtered fluid passing through the filter base and outlet ports and the housing outlet.

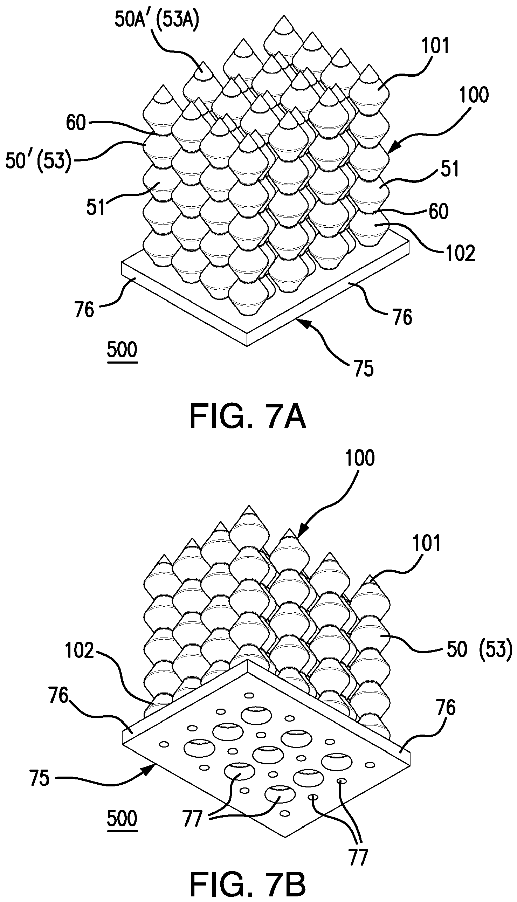

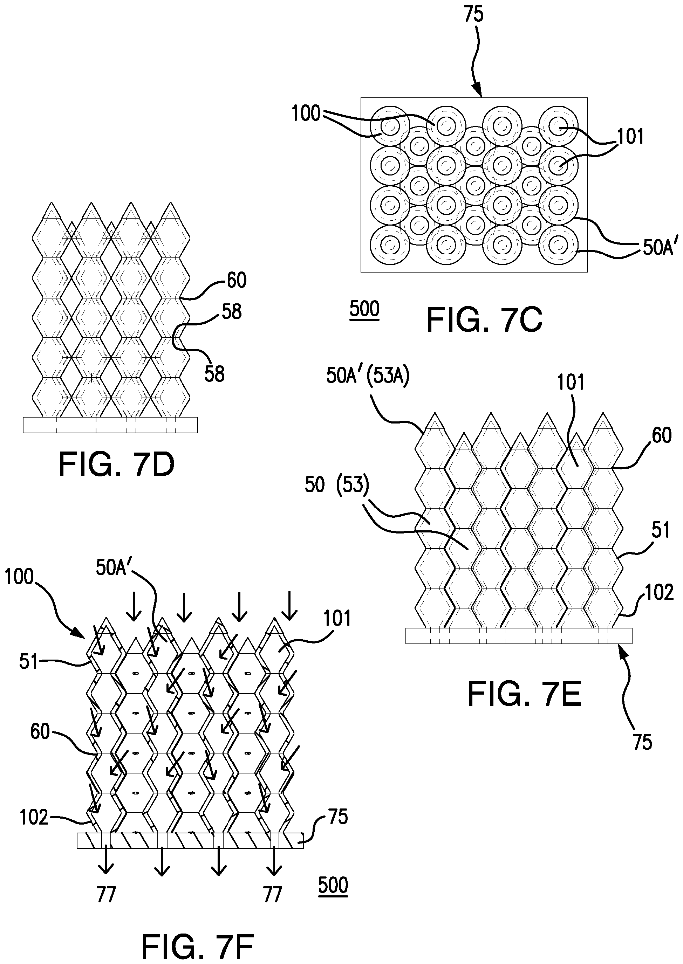

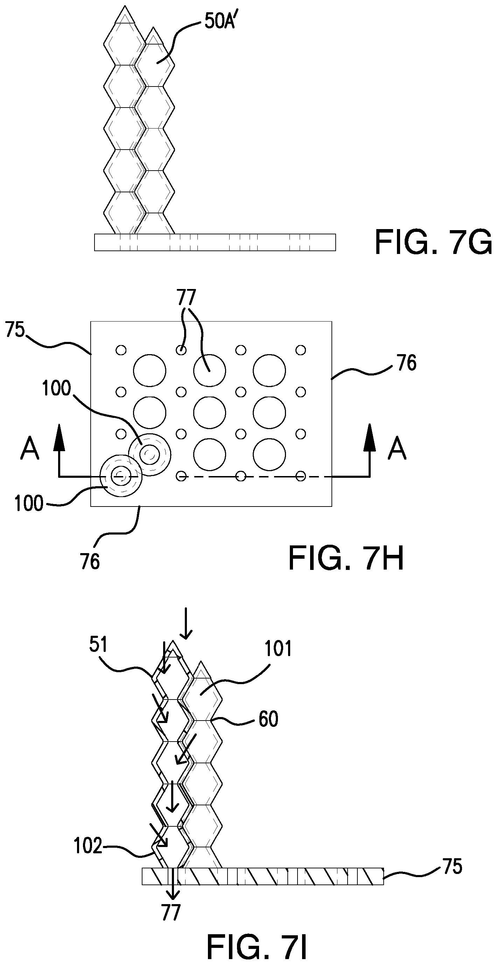

Figure 7A illustrates a top perspective view of a filter according to another aspect of the invention, the filter including a plurality of arms including hollow non-rounded elements (each element illustrated as having the shape of opposing cones) wherein adjacent hollow non-rounded elements are connected to, and in fluid communication with each other via an integral neck, each arm having a first end and a second end, wherein the second end is connected to a hollow base; Figure 7B illustrates a bottom perspective view of the filter shown in Figure 7A; Figure 7C shows a top view of the filter shown in Figure 7A; Figure 7D is a side perspective transparent view of the filter shown in Figure 7A; Figure 7E is side perspective view of the filter shown in Figure 7A; and Figure 7F is a cross-sectional view of the filter shown in Figure 7A, also showing outside-in filtration flow paths, with the filtrate passing through the base at the bottom; Figure 7G shows a side transparent view of two arms of the filter shown in Figure 7A in an axial arrangement; Figure 7H shows a top view of the two arms shown in Figure 7G, and Figure 7I shows a cross-sectional view of one arm along line A-A of Figure 7H, also showing the outside-in filtration path.

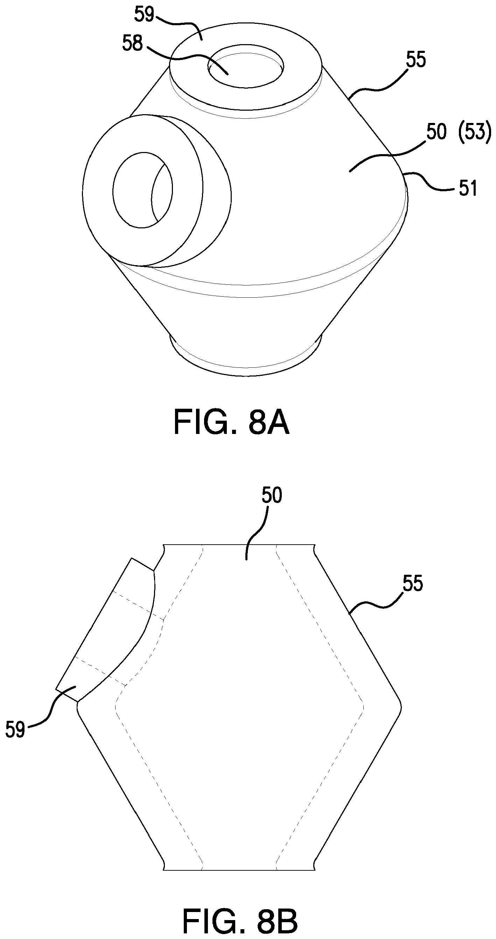

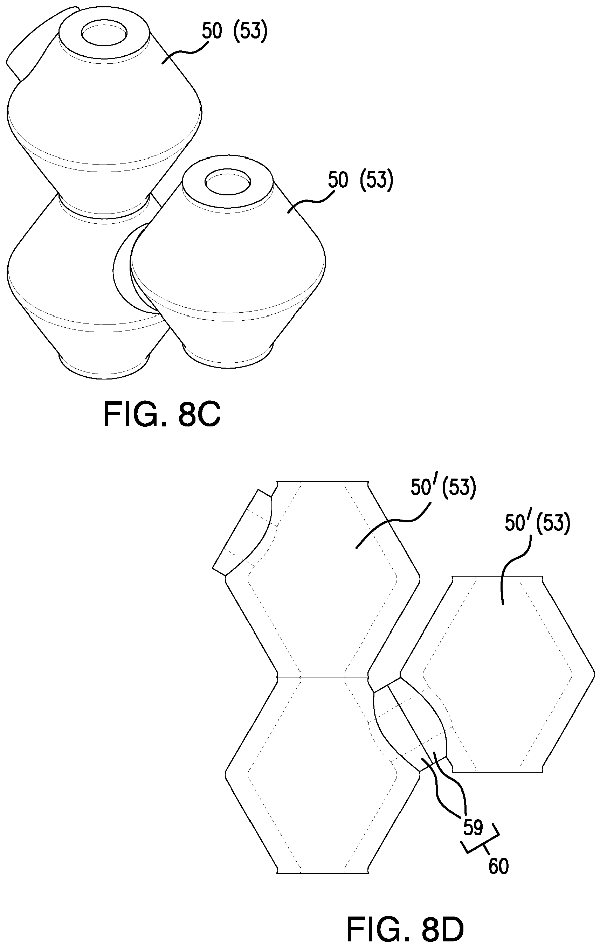

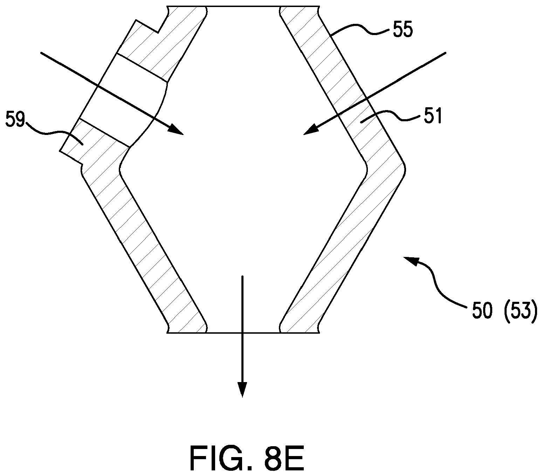

Figures 8A-8E show various views of hollow non-rounded elements in filter arms in the filter as generally shown in Figure 7A. Figure 8A shows a perspective view of a hollow non-rounded element including a plurality of coordination points; Figure 8B shows a transparent side view of the element shown in Figure 8A; Figure 8C shows a perspective view of several hollow non-rounded elements, wherein each element is connected to, and in fluid communication with, an adjacent element via a coordination point, the connected coordination points providing an integral neck; Figure 8D shows a transparent side view of the elements shown in Figure 8C; and Figure 8E show a cross-sectional view of the element shown in Figure 8B, also showing outside-in filtration.

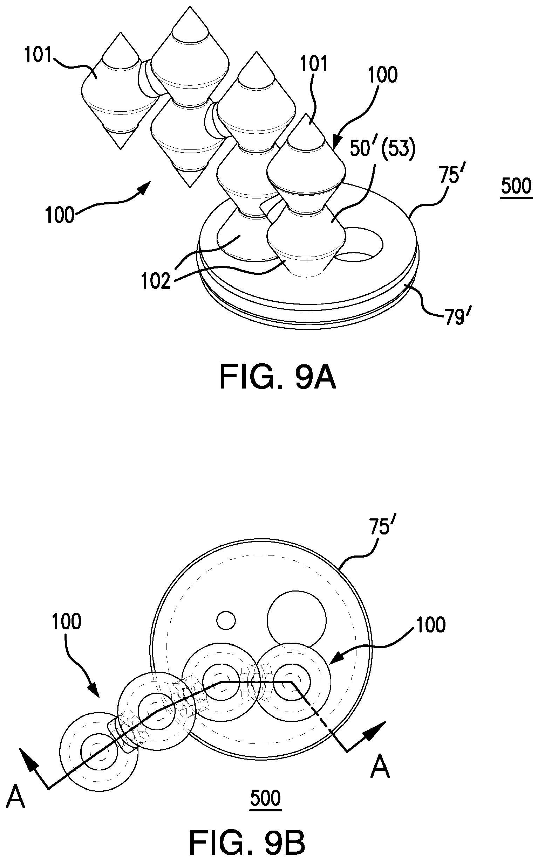

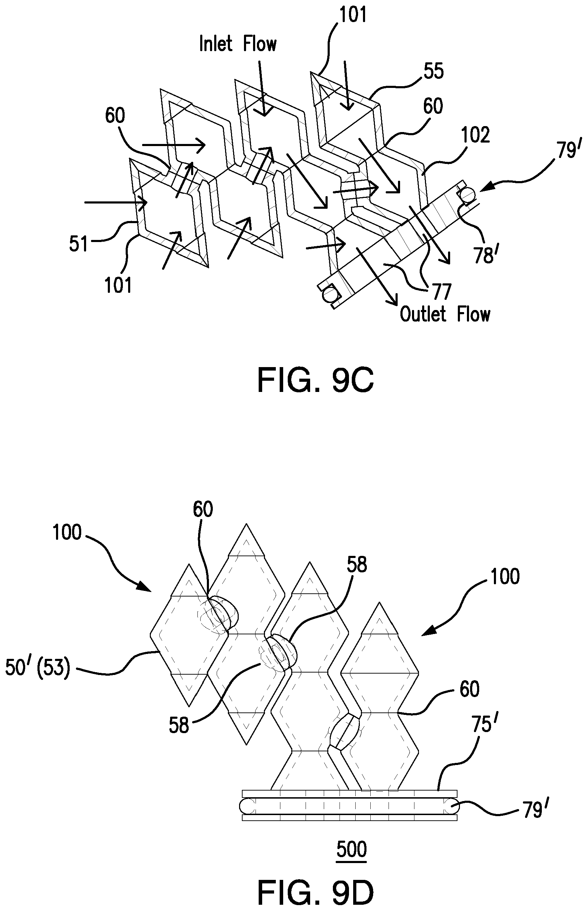

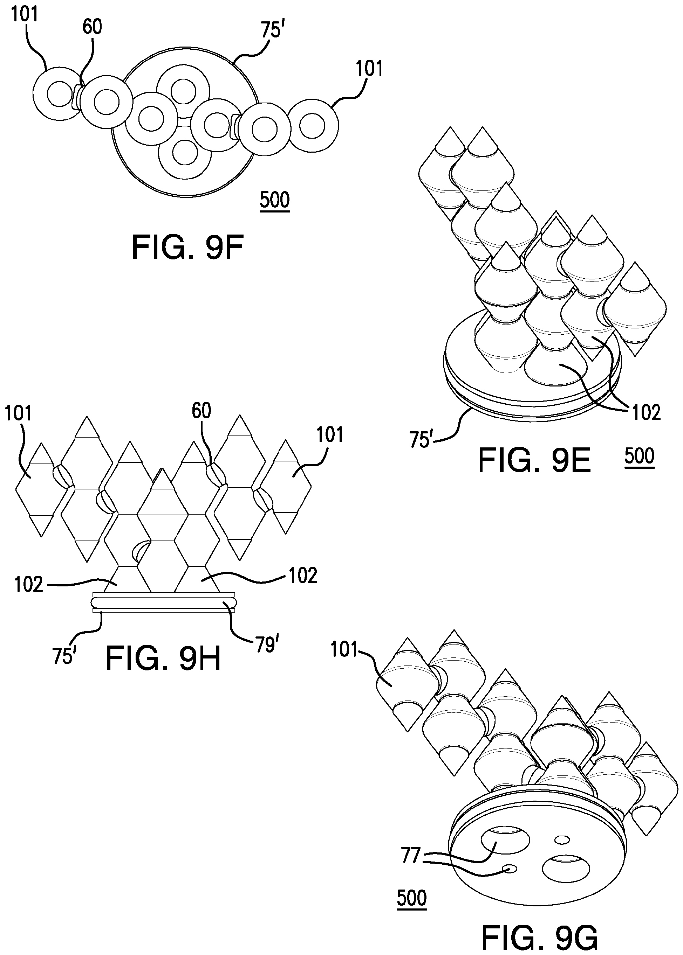

Figures 9A-9H show other aspects of filters with filter arms having hollow non-rounded elements, wherein portions of a filter arm can have linearly aligned hollow non-rounded elements and non-linearly aligned hollow non-rounded elements, wherein each element is connected to, and in fluid communication with, an adjacent element via a coordination point, the connected coordination points providing an integral neck, and wherein the base includes a groove in the side wall and a resilient seal in the groove. Figure 9A shows a side perspective view; Figure 9B shows a top view; Figure 9C shows a side cross-sectional view along line A-A of Figure 9B, also showing outside-in filtration through the side walls of the hollow elements providing filtered fluid passing through the base of the filter and the outlet; Figure 9D shows a side transparent view, also showing non-linearly aligned hollow elements connected via coordination points; Figure 9E shows a side perspective view of another aspect of a filter with a plurality of filter arms, wherein some of the filter arms have both linearly aligned hollow non-rounded elements and non-linearly aligned hollow non-rounded elements; Figure 9F is a top view of the filter shown in Figure 9E; Figure 9G is a bottom perspective view of the aspect of the filter shown in Figure 9E, and Figure 9H is a side view of the filter shown in Figure 9E.

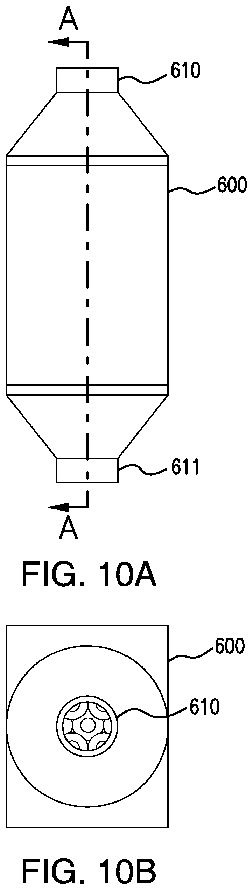

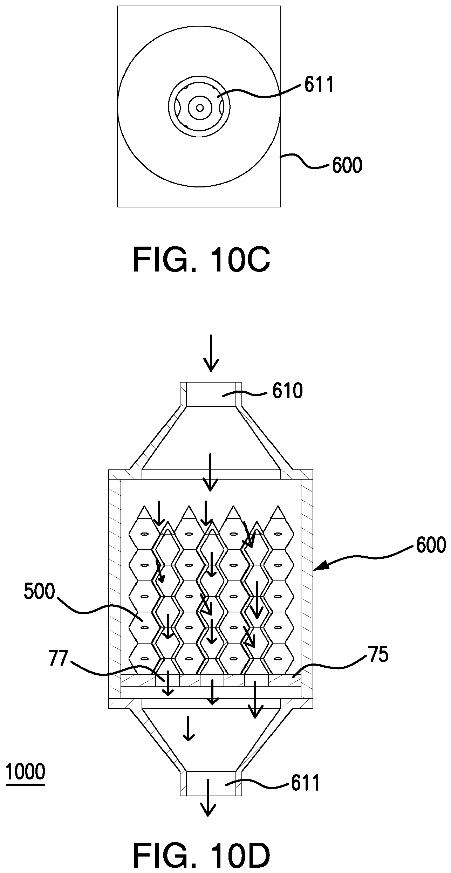

Figures 10A-10D show a filter device according to another aspect of the invention, comprising the aspect of the filter shown in Figure 7A arranged in a housing. Figure 10A shows a side view of the housing having an inlet and an outlet, Figure 10B shows a top view of the housing; Figure 10C shows a bottom view of the housing; and Figure 10D shows a sectional view of the filter device along line A-A of Figure 10A, also showing the filter shown in Figure 7A arranged in the housing, the housing defining a fluid flow path between the inlet and the outlet, with the filter arranged in the housing across the fluid flow path, wherein outside-in filtration provides filtered fluid passing through the filter base and outlet ports and the housing outlet.

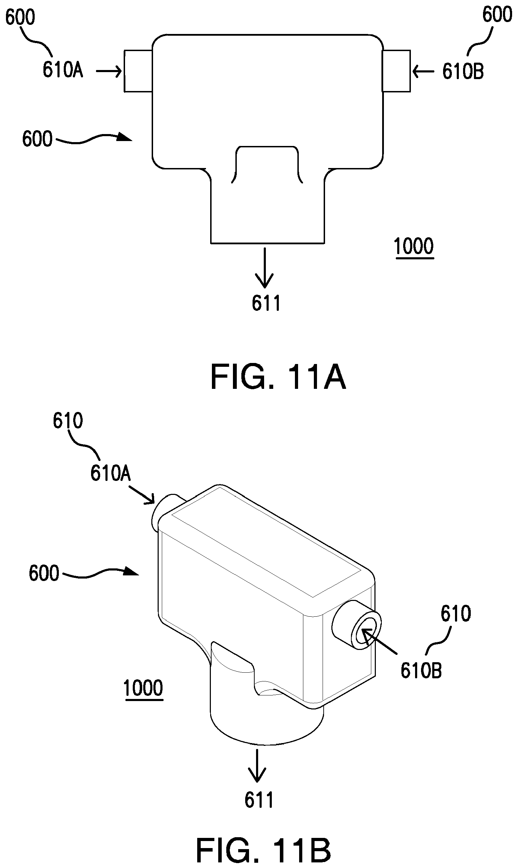

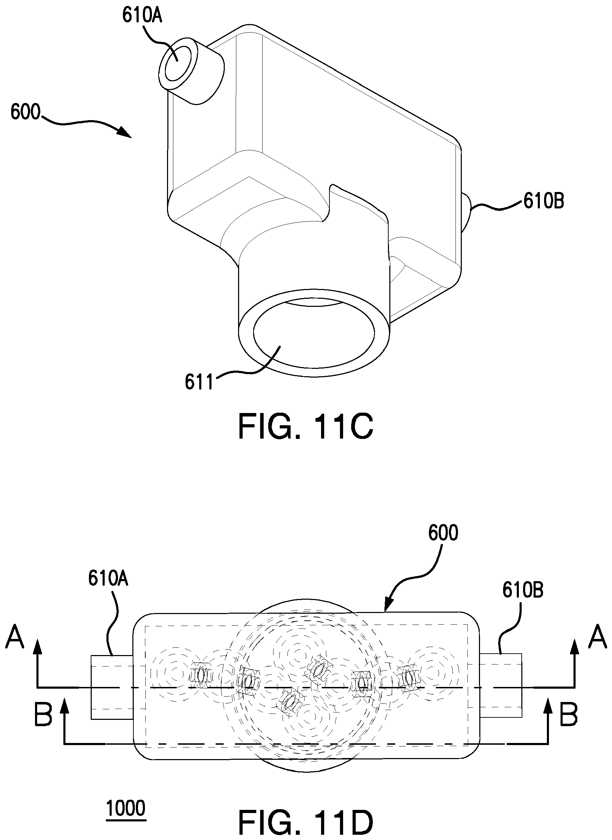

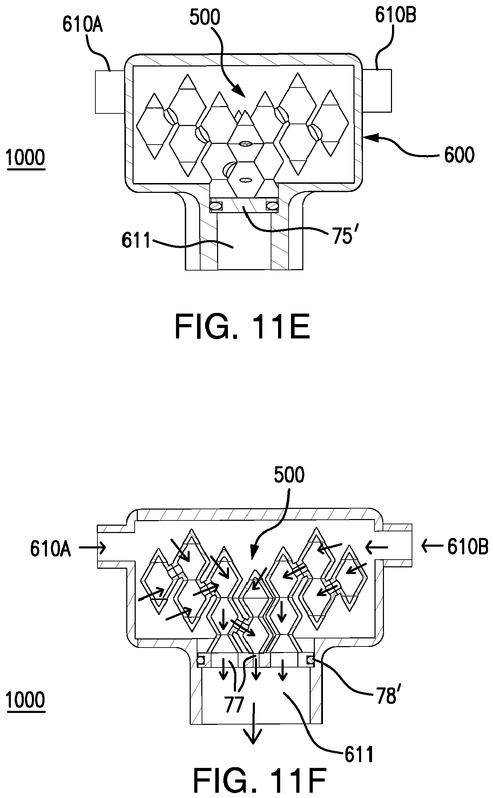

Figures 11A-11F show a filter device according to another aspect of the invention, comprising the aspect of the filter shown in Figure 9E arranged in a housing. Figure 11A shows a side view of the housing, including two housing inlets and a housing outlet; Figure 11B shows a perspective top view of the housing shown in Figure 11A; Figure 11C shows a perspective bottom view of the housing shown in Figure 11A; Figure 11D shows a top view of the housing; Figure 11E shows a sectional view of the filter device along line B-B of Figure 11D, also showing the filter shown in Figure 9E arranged in the housing; and Figure 11F shows a sectional view of the filter device along line A-A of Figure 11D, also showing the filter shown in Figure 9E arranged in the housing, the housing defining fluid flow paths between the inlets and the outlet, with the filter arranged in the housing across the fluid flow paths, wherein outside-in filtration provides filtered fluid passing through the filter base and outlet ports and the housing outlet..

### DETAILED DESCRIPTION OF THE INVENTION

An aspect of the invention provides a filter comprising (a) at least one filter arm comprising a plurality of hollow elements in fluid communication with each other, the hollow elements having porous walls, the at least one filter arm having a first end and a second end; and, (b) a hollow base having a side wall, and an outlet port, wherein the hollow base in fluid communication with the at least one filter arm, wherein the second end of the at least one filter arm is connected to the hollow base.

In a preferred aspect, the filter comprises a plurality of filter arms, each filter arm in fluid communication with the hollow base.

The hollow base has at least one base outlet.

The base can have any suitable shape, e.g., rectangular, square, triangular, round, or oval.

The base has one or more side walls, and the side wall(s) can be porous or, in a preferred aspect, non-porous.

In some aspects, the side wall(s) of the base include a groove, and a resilient seal such as an o-ring in the groove. If desired, the use of a seal can be desirable when the filter is inserted in a separate housing. Alternatively, if for example, the filter is produced as part of the housing or is welded to the housing, the seal can be eliminated, if desired.

Aspects of the invention include filter devices including aspects of the filters, and methods of filtration using the filters and filter devices.

In accordance with aspects of the invention, a hollow element can have a rounded shape or a non-rounded shape, and a filter arm can include hollow elements each having the same shape or having different shapes. A filter arm can have a combination of different hollow element shapes, e.g., rounded shapes (including spherical and oval) and non-rounded shapes (including hexagonal, pyramidal, conal, diamond). For example, an arm can include hollow elements having a rounded shape and a non-rounded shape, and/or hollow elements including a plurality of different rounded shapes and/or a plurality of different non-rounded shapes.

In some aspects of the filter, an individual filter arm can comprise at least two hollow elements each having a different shape and/or the filter can include a plurality of arms wherein at least two arms have different configurations from each other, e.g., one arm can have hollow elements with rounded shapes and another arm can have hollow elements with non-rounded shapes, or the respective arms can have different combinations of shapes.

Alternatively, or additionally, two or more different hollow elements can have different diameters and/or different wall thicknesses.

A filter arm can include linearly arranged hollow elements and/or non-linearly arranged hollow elements.

In some aspects, a filter can have an increasing tapered flow geometry from the first end of the filter arm to the second end of the filter arm.

In an aspect of the filter, adjacent hollow elements in a filter arm have different diameters and/or tapered flow geometries.

Advantageously, filters can be produced with high packing densities. For example, filters can be produced with packing densities of about 20% greater than achieved with hollow fiber filters. Additionally, filters can be designed for direct flow and cross flow configurations. If desired, filters can be produced without support elements such as meshes or screens.

Each of the components of the invention will now be described in more detail below, wherein like components have like reference numbers.

Figures 1A-1I illustrate various views of an aspect of a filter including a plurality of arms, each arm having a plurality of hollow rounded elements. Figure 1A and 1B illustrate respectively, top and bottom perspective views of an aspect of a filter 500 including a plurality of arms 100 (shown arranged vertically in an array) each arm having a first (upper) end 101 and a second (lower) end 102, the arms including a plurality of hollow rounded elements 50 (illustrated as spherical elements 52) having porous walls 51 (wherein adjacent elements are in fluid communication with each other via hollow integral necks 60 connected to the side walls of the adjacent elements) and a base 75, wherein the lower ends of the arms are in fluid communication with the base (shown having a rectangular shape), and the base has side walls 76, and base outlet ports 77 in fluid communication with the lower ends of the arms. Adjacent hollow rounded elements in an arm are in fluid communication with each other, and in the illustrated aspect, adjacent arms are offset by each other by one half the spacing of the hollow elements in each of the horizontal planes (as shown in more detail in Figures 1C and 1H (top views) and 1D-1G and 1I (side views)). In the illustrated aspect, the terminal element 50A (52A) at the first end has a different appearance (e.g., a pointed closed upper end) than the appearance of the other hollow rounded elements.

Figures 1F and 1I (partial view with two arms in an axial arrangement) illustrate sectional views of the filter 500, also showing an outside-in filtration flow path through the porous walls 51 and flow through the base outlet ports 77.

Filters can have any number of filter arms and hollow elements. Typically, the filter has at least about 3 arms, each arm having at least about 2 hollow elements. Preferably, the filter has at least about 7 arms, each arm having at least about 3 hollow elements.

If desired, filter arms can be connected vertically and/or diagonally.

Figures 2A-2H show various views of the hollow rounded elements 50 (illustrated as spherical elements 52) having porous walls 51 with outer surfaces 55, as shown in the filter arms in the filter as generally shown in Figure 1A, wherein adjacent hollow rounded elements are connected to, and in fluid communication via, hollow coordination points 58, shown with surrounding collars 59 on the outer surfaces, providing integral necks 60. As shown in Figure 2E, the porous walls 51 allow outside-in filtration.

Figures 2F-2H show a plurality of the hollow rounded elements in filter arms 100 having first ends 101 and second ends 102, wherein the second ends are each connected to, and in fluid communication with the base 75, providing filter 500.

Hollow elements can have any number coordination points. Typically, a hollow element has at least 2 coordination points (e.g., to receive fluid from one hollow element and to pass fluid to another hollow element), more typically, at least 3 coordination points, and preferably, at least 4 coordination points.

Figure 2H shows that hollow elements can have a plurality of connections to other hollow elements. The hollow elements can be linearly aligned in a filter arm, e.g., as shown in Figure 1A; non-linearly arranged, e.g., as shown in Figure 2H, or, as also shown in Figure 2H, portions of a filter arm can have linearly aligned hollow elements and non-linearly aligned hollow elements.

In some aspects, an arm can include hollow elements having different inner diameters and/or inner geometries. As shown in Figures 3A-3C and 4A-4C, adjacent elements 50 are joined via connection points 58 forming integral necks 60, providing fluid communication between the adjacent elements.

Figures 3A-3C show a filter 500 including a filter arm 100 with hollow rounded elements 52, connected via coordination points 58 forming integral necks 60, also showing tapered flow geometries increasing in lateral diameter toward the base 75 of the filter. The sectional view in Figure 3C shows tapered flow geometries increasing in diameter toward the base 75 of the filter. Advantageously, a tapered flow path can enable uniform fluid flow distribution between entrance and exit of the flow.

Figures 4A-4C show a filter 500 including a filter arm 100 with hollow rounded elements 52 having porous side walls 51, the elements connected via coordination points 58 forming integral necks 60, also showing an outside-in flow path and several elements having a reduced internal volume toward the base 75 of the filter, providing a tapered flow path. Advantageously, a large portion of the surface area is retained, versus a non-tapered (non-reduced internal volumes) of an otherwise similar configuration, while gaining flow resistance advantages of the tapered drainage flow path. The neck at the transition (coordination) point is the flow restriction point of the fundamental geometry and the more the restriction point can be relieved, the less flow resistance in the system (lower overall pressure drop).

Figures 5A-5E show a filter device 1000 according to another aspect of the invention, comprising the aspect of the filter 500 shown in Figure 2F arranged in a housing 600 having housing inlets 610 (shown as two inlets 610A, 610B), and a housing outlet 611, defining fluid flow paths between the inlets and the common outlet with the filter 500 arranged in the housing across the fluid flow paths (shown in more detail in the sectional view in Figure 5E), wherein (using Figure 2E for reference) outside-in filtration provides filtered fluid passing through the filter base 75 and base outlet ports and the housing outlet.

Figures 6A-6C show a filter device 1000 according to another aspect of the invention, comprising the aspect of the filter 500 shown in Figure 1A arranged in a housing 600, having a housing inlet 610 and a housing outlet 611, defining a fluid flow path between the housing inlet and the housing outlet with the filter arranged in the housing across the fluid flow path. The sectional view in Figure 6C shows outside-in filtration provides filtered fluid passing through the filter base 75 and base outlet ports 77 and the housing outlet 611.

As noted above, filters can include hollow elements having a rounded shape and/or a non-rounded shape. Filters with hollow elements having a rounded shape were described in more detail above, the following section will describe filters with hollow elements having a non-rounded shape in more detail.

Figures 7A-7I illustrate various views of an aspect of another filter 500 including a plurality of arms 100 (shown arranged vertically in an array) each arm having a first (upper) end 101 and a second (lower) end 102, the arms including a plurality of hollow non-rounded elements 50' (each element illustrated as having the shape of opposing cones 53) having porous walls 51 (wherein adjacent elements are in fluid communication with each other via coordination points 58 forming hollow integral necks 60 connected to the side walls of the adjacent elements) and a base 75, wherein the lower ends of the arms are in fluid communication with the base, and the base has side walls 76, and base outlet ports 77 in fluid communication with the lower ends of the arms. Adjacent hollow rounded elements in an arm are in fluid communication with each other, and in the illustrated aspect, adjacent arms are offset by each other by one half the spacing of the hollow elements in each of the horizontal planes (as shown in more detail in Figures 7C and 7H (top views) and 7D-7G and 71 (side views)). In the illustrated aspect, the terminal element 50A' (53A) has a different appearance (e.g., a pointed closed upper end) than the appearance of the other hollow non-rounded elements.

Figures 7F and 7I (partial view with two arms in an axial arrangement) illustrate sectional views of the filter 500, also showing an outside-in filtration flow path through the porous walls 51 and through the base 75 and base outlet ports 77.

Figures 8A-8E show various views of the hollow non-rounded elements 50 (illustrated in the shape of opposing cones 53) having porous walls 51 with outer surfaces 55, as generally shown in the filter arms 100 in the filter 500 shown in Figure 7A (with the exception that the terminal element shown in Figure 8C has an open non-pointed end and some hollow non-rounded elements are not linearly arranged), wherein adjacent hollow rounded elements are connected to, and in fluid communication via, hollow coordination points 58, shown with surrounding collars 59 on the outer surfaces, providing integral necks 60. As shown in the cross-sectional view of Figure 8E, the porous walls 51 allow outside-in filtration.

Figures 9A-9H show other aspects of filters 500 with filter arms 100 having a plurality of hollow non-rounded elements 50'(53), each filter arm having a first (upper) end 101 and a second (lower) end 102, wherein portions of a filter arm can have linearly aligned hollow non-rounded elements and non-linearly aligned hollow non-rounded elements, wherein each element is connected to, and in fluid communication with, an adjacent element via coordination points 58, the connected coordination points providing an integral neck 60, and wherein the base 75' (shown having a round shape) includes a groove 78' in the side wall and a resilient seal 79' (such as an o-ring) in the groove, and base outlet ports 77. In particular, the side cross-sectional view shown in Figure 9C shows outside-in filtration through the porous side walls 51, the base 75' and the base outlet ports 77; Figure 9D shows adjacent non-linearly aligned hollow elements connected via coordination points; and Figure 9E shows another aspect of a filter with a plurality of filter arms, wherein some of the filter arms have both linearly aligned hollow non-rounded elements and non-linearly aligned hollow non-rounded elements.

Figures 10A-10D show a filter device 1000 according to another aspect of the invention, comprising the aspect of the filter 500 shown in Figure 7A arranged in a housing 600, having a housing inlet 610 and a housing outlet 611, the housing defining a fluid flow path between the inlet and the outlet, with the filter arranged in the housing across the fluid flow path, wherein, as shown in particular in the sectional view in Figure 10D, outside-in filtration provides filtered fluid passing through the filter base 75 and outlet ports 77 and the housing outlet 611.

Figures 11A-11F show a filter device 1000 according to another aspect of the invention, comprising the aspect of the filter 500 shown in Figure 9E arranged in a housing 600 including housing inlets 610 (illustrated as two inlets 610A, 610B), and a housing outlet 611, the housing defining fluid flow paths between the inlets 610A, 610B and the outlet 611, with the filter 500 arranged in the housing across the fluid flow paths, wherein, as shown in particular in the sectional view in Figure 11F, outside-in filtration provides filtered fluid passing through the filter base 75' and base outlet ports 77 and the housing outlet 611.

If desired, aspects of the invention can be utilized in closed and sterile systems. As used herein, the term "closed" refers to a system that allows the collection and processing (including filtration, and, if desired, the manipulation, e.g., separation of portions, separation into components, storage, and preservation) of fluid, without exposing the contents of the system to the environment in which it is being used. A closed system can be as originally made, or result from the connection of system components of sanitary fittings including sterile docking devices.

The hollow elements can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on the size of the particles to be utilized, the composition of the fluid to be treated, and the desired effluent level of the treated fluid.

The filter can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869. Typically, the filter element has a CWST of at least about 17 dynes/cm (about 17 x 10⁻⁵ N/cm), for example, a CWST in the range of from about 17 dynes/cm to about 90 dynes/cm (about 17 x 10⁻⁵ N/cm to about 90 x 10⁻⁵ N/cm), more typically in the range of about 50 dynes/cm to about 60 dynes/cm (about 50 x 10⁻⁵ N/cm to about 60 x 10⁻⁵ N/cm).

The surface characteristics of the filter can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction.

The filter can include additional elements, layers, or components, that can have different structures and/or functions, e.g., at least one of any one or more of the following: prefiltration, support, drainage, spacing and cushioning. Illustratively, the filter can also include at least one additional element such as a mesh and/or a screen.

In accordance with aspects of the invention, the filter can have a variety of configurations, including planar, and hollow cylindrical.

The filter, in some aspects comprising a plurality of filter elements is typically disposed in a housing comprising at least one inlet and at least one outlet and defining at least one fluid flow path between the inlet and the outlet, wherein the filter is across the fluid flow path, to provide a filter device. Preferably, the filter device is sterilizable. Any housing of suitable shape and providing at least one inlet and at least one outlet may be employed.

The housing can be fabricated from any suitable rigid impervious material, including any impervious thermoplastic material, which is compatible with the fluid being processed. For example, the housing can be fabricated from a metal, such as stainless steel, or from a polymer. Preferably, however, and as noted below, the housing can be manufactured by additive manufacturing, extrusion, and light polymerization.

Filters and filter elements according to aspects of the invention are preferably monolithic, preferably manufactured via additive manufacturing (sometimes referred to as "additive layer manufacturing" or "3D printing"). They are typically formed by repeated depositions of a metal powder bound together with an activatable binder (e.g., binder jetting, sometimes referred to as "drop on powder"), typically followed by agglomerating the powder, e.g., by sintering. Other suitable methods include extrusion (e.g., paste extrusion, fused filament fabrication and fused deposition modelling) and light polymerization (e.g., stereolithography apparatus (SLA), and digital light processing (DLP)).

In those aspects wherein the hollow base is made from the same material as the filter arms, the side wall(s) of the base will be porous, in those aspects wherein the hollow base is made from a different material than the filter arms, the side wall(s) of the base will typically be non-porous.

Housing and filter elements can be manufactured together via additive manufacturing in a continuous operation at substantially the same time.

Any suitable additive manufacturing equipment can be used, and a variety of production 3D printers are suitable and commercially available.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred aspects of this invention are described herein, including the best mode known to the inventors for carrying out the invention. Variations of those preferred aspects may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A filter comprising:
(a) at least one filter arm comprising a plurality of hollow elements in fluid communication with each other, the hollow elements having porous walls, the at least one filter arm having a first end and a second end; and,
(b) a hollow base having a side wall, and a base outlet port, wherein the hollow base is in fluid communication with the at least one filter arm, wherein the second end of the at least one filter arm is connected to the hollow base.

2. The filter of claim 1 further comprising a plurality of filter arms, each of the plurality of filter arms in fluid communication with the hollow base, wherein the hollow base has a plurality of base outlet ports, each of the plurality of base outlet ports in fluid communication with a separate filter arm.

3. The filter of claim 2, wherein the filter arms include linearly arranged adjacent hollow elements and/or non-linearly arranged hollow elements.

4. The filter of any one of claims 1-3, wherein the hollow elements have a rounded shape.

5. The filter of claim 4, wherein the hollow elements have a spherical shape.

6. The filter of any one of claims 1-3, wherein the hollow elements have a non-rounded shape.

7. The filter of any one of claims 1-6, comprising two or more hollow elements having different shapes and/or different diameters and/or different wall thicknesses.

8. The filter of any one of claims 1-7, wherein at least one filter arm comprises two or more hollow elements having different shapes and/or different diameters and/or different wall thicknesses.

9. The filter of claim 8, having an increasing tapered flow geometry from the first end of the filter arm to the second end of the filter arm.

10. The filter of claims 8 or 9, wherein adjacent hollow elements in a filter arm have different diameters and/or tapered flow geometries.

11. A filter device comprising a housing having at least one inlet and at least one outlet, defining at least one fluid flow path between the at least one inlet and the at least one outlet, with the filter of any one of claims 1-10 arranged in the housing across the at least one fluid flow path.

12. A method of filtration, the method comprising passing the fluid through the filter of any one of claims 1-10 or the filter device of claim 11.
